# EUROPÄISCHE PATENTANMELDUNG

(11) **EP 1 284 428 A2**
(43) Veröffentlichungstag der Anmeldung: **19.02.2003**
(21) Anmeldenummer: 02015559.4
(22) Anmeldetag: 11.07.2002
(51) Int. Cl.: G02B 6/42

(54) **Kopplungsvorrichtung zur Kopplung eines Lichtwellenleiters und einer Diode sowie Montageverfahren**

(30) Priorität: 17.08.2001 DE 10140401; 14.01.2002 DE 10201043
(71) Anmelder: Tyco Electronics AMP GmbH, 64625 Bensheim (DE)
(72) Erfinder: Lannoije, Marnix, 67346 Speyer (DE); Kopf, Pia, 64683 Einhausen (DE); Hahn, Joachim, 61389 Schmitten (DE)
(74) Vertreter: Grünecker, Kinkeldey, Stockmair & Schwanhäusser Anwaltssozietät

(57) **Zusammenfassung**

Die vorliegende Erfindung bezieht sich auf eine Kopplungsvorrichtung zur Kopplung mindestens eines Lichtwellenleiters und mindestens einer Sende- und/oder Empfangsdiode miteinander, wobei die Sende- und/oder Empfangsdiode elektrisch mit einem Schaltungsträger und optisch mit dem Lichtwellenleiter verbindbar ist und die Kopplungsvorrichtung eine mit der Sende- und/oder Empfangsdiode mechanisch verbindbare Fassung und einen davon getrennten, mit dem Lichtwellenleiter mechanisch verbindbaren Einsteckkopf, der zumindest teilweise in die Fassung einführbar ist, aufweist. Um eine Kopplungsvorrichtung zur Kopplung mindestens eines Lichtwellenleiters und mindestens einer Sende- und/oder Empfangsdiode miteinander und mit einem Schaltungsträger sowie ein zugehöriges Montageverfahren anzugeben, wodurch eine möglichst einfache und kostengünstige Herstellung sowie eine verbesserte Kopplungseffizienz erreicht wird, weist die Fassung eine Aufnahme für die Positionierung und mechanische Fixierung des Einsteckkopfes sowie eine davon getrennte Federhülse, die mit den Schaltungsträger verbindbar ist, auf.

## Beschreibung

Die vorliegende Erfindung bezieht sich auf eine Kopplungsvorrichtung zur Kopplung mindestens eines Lichtwellenleiters und mindestens einer Sende- und/oder Empfangsdiode miteinander und mit einem Schaltungsträger nach dem Oberbegriff des Patentanspruchs 1 sowie auf ein zugehöriges Montageverfahren.

Wegen ihrer vielfältigen Vorteile gewinnt die optische Signalübertragung über Lichtwellenleiter (LWL) ständig an Bedeutung. Wichtige Anmeldungsbereiche finden sich beispielsweise in der Nachrichtentechnik, der peripheren Verbindungstechnik zwischen Geräten und Anlagen, aber auch räumlich getrennten Standorten sowie bei Bordsystemen für Flugzeuge, Schiffe und Kraftfahrzeuge. Kabelfernsehen, Gemeinschaftsantennenanlagen sowie Mess-, Steuer- und Regelungstechnik sind weitere wichtige Anwendungsgebiete der leitungsgebundenen optischen Signalübertragung. Gegenüber drahtgebundenen Systemen bieten LWL-Übertragungssysteme folgende Vorteile:
- Kein Nebensprechen zwischen zwei Leitungen,
- große Übertragungskapazität bei geringem Gewicht,
- geringer Platzbedarf bei der Verlegung,
- optimale elektrische Isolation zwischen Sender und Empfänger,
- absolute Unempfindlichkeit gegenüber elektrischen und elektromagnetischen Umweltstörungen.

Insbesondere der letztgenannte Punkt ist im Bereich der Kraftfahrzeugelektronik, wo besonders hohe Anforderungen bezüglich der Unempfindlichkeit gegenüber Umweltbedingungen bestehen, von besonderer Bedeutung.

In allen Anwendungsbereichen muss besonderes Augenmerk auf die erforderlichen Übergänge zwischen optischer und elektronischer Signalübertragung und umgekehrt gerichtet werden. Diese Übergänge geschehen an elektrooptischen Wandlern, die entweder elektrische Signale in optische oder optische Signale in elektrische wandeln. Für den erstgenannten Übergang von elektronischer Signalverarbeitung auf einen Lichtwellenleiter werden üblicherweise sogenannte lichtemittierende Dioden (LED), Laserdioden, oder Infrarot-Lumineszenzdioden (IRED) verwendet. Für die Wandlung von über Lichtwellenleiter transportierten Signalen in elektrische Signale finden z. B. Fotodioden Anwendung. Es existieren auch Dioden, die sowohl als Strahlungssender wie auch als Strahlungsempfänger fungieren können.

Um möglichst viel optische Strahlung in die Lichtwellenleiter einkoppeln bzw. aus ihnen auskoppeln zu können, muss der präzisen Verbindung zwischen dem Halbleiterbauteil und dem Lichtwellenleiter große Beachtung beigemessen werden. Je geringer der Faserdurchmesser ist, umso höher sind die Anforderungen an die exakte Justierung zwischen Halbleiterbauteil und Lichtwellenleiter.

Bei herkömmlichen Kopplungsvorrichtungen, wie sie z.B. für den sogenannten Media Oriented System Transfer (MOST) verwendet werden, werden sogenannte Pigtails, d. h. Dioden, die unlösbar mit einem kurzen Stück Lichtwellenleiter verbunden sind und an dem Lichtwellenleiter optische Anschlüsse tragen, als eine Einheit auf einem Schaltungsträger, beispielsweise einer Leiterplatte montiert.

Bei dieser herkömmlichen Kopplungsvorrichtung tritt jedoch einerseits das Problem auf, dass das abstehende Lichtwellenleiterende einer automatisierten Montage entgegensteht. Zum anderen befindet sich der an die Diode gekoppelte Lichtwellenleiter bereits in unmittelbarer Nähe der Lötstelle, wenn die Diode elektrisch kontaktiert wird. Insbesondere in dem Fall, dass der Lichtwellenleiter eine sogenannte Plastic Optical Fiber (POF) ist, kann es zu einer unzulässigen thermischen Belastung und damit zu einer Schädigung des Lichtwellenleiters kommen.

Die deutsche Offenlegungsschrift DE 197 18 950 A1 offenbart ein optoelektronisches Modul, das zur Wandlung elektrischer in optische Signale beziehungsweise optischer in elektrische Signale dient und in Form eines "Receptacle" ausgebildet ist, bei dem der LWL nicht fest mit dem Modul verbunden ist, sondern Teil eines Steckers ist, der lösbar und verdrehsicher in einer Aufnahme geführt ist. Die Aufnahme weist einen Flansch auf, dessen Stirnfläche senkrecht zur LWL- und Steckerachse und parallel zu den Breitseiten eines Silizium-Substrates verläuft. Da bei dieser Art der Kopplung die Diode und die Aufnahme auf einem Silizium-Substrat fixiert werden und die Aufnahme lediglich als eine einfache Hülse ausgebildet ist, besteht das Problem, dass die mechanische Belastbarkeit der Kopplungsvorrichtung sowohl bei einer automatisierten Montage wie auch bei einem späteren Betrieb unter rauen Umweltbedingungen nur mangelhaft ist.

Daher besteht die Aufgabe, die der vorliegenden Erfindung zugrunde liegt, darin, eine Kopplungsvorrichtung zur Kopplung mindestens eines Lichtwellenleiters und mindestens einer Sende- und/oder Empfangsdiode miteinander und mit einem Schaltungsträger sowie ein zugehöriges Montageverfahren anzugeben, wodurch eine möglichst einfache und kostengünstige Herstellung sowie eine verbesserte Kopplungseffizienz erreicht wird.

Diese Aufgabe wird durch eine Kopplungsvorrichtung mit den Merkmalen des Patentanspruchs 1 sowie durch ein Montageverfahren mit den Merkmalen des Patentanspruchs 10 gelöst. Vorteilhafte Weiterbildungen der Erfindung sind Gegenstand mehrerer Unteransprüche.

Der Erfindung liegt der Gedanke zugrunde, dass die Sende- und/oder Empfangsdiode, im folgenden kurz als Diode bezeichnet, zunächst ohne den Lichtleiter elektrisch mit dem Schaltungsträger verbunden wird, anschließend von einer Fassung umgeben wird, in welcher sie vergossen wird, und der Lichtwellenleiter, der einen in die Fassung passenden Einsteckkopf aufweist, erst nach Abschluss aller thermisch belastenden Prozessschritte in die Fassung eingesteckt wird. Erfindungsgemäß ist die Fassung aus einer Aufnahme für die Positionierung und mechanische Fixierung des Einsteckkopfes und einer davon getrennten Federhülse, die mit dem Schaltungsträger verbindbar ist, zusammengesetzt.

Daher ist einerseits der Lichtwellenleiter zu keiner Zeit der Verarbeitung einer thermischen Belastung ausgesetzt, die zu einer Schädigung oder Einschränkung der zulässigen Prozesstemperaturen führen könnte. Eine automatische Montage ist mit dieser erfindungsgemäßen Lösung möglich, da keine flexiblen Leitungen gehalten werden müssen. Andererseits besitzt diese Art der Kopplung eine verbesserte mechanische Stabilität sowohl für die automatisierte Montage wie auch für den Betrieb. Auf diese Weise kann außerdem die Fassung aus verschiedenen Materialien gefertigt werden, die jeweiligen mechanischen Anforderungen optimal genügen. Die Federhülse kann bei dieser Ausführungsform als Sekundärfeder die Verrastung zwischen Einsteckkopf und Fassung festigen. Dadurch, dass die Diode als Einzelhableiter auf dem Schaltungsträger gebondet wird, kann darüber hinaus der benötigte elektronische Schaltkreis in ausreichender Entfernung auf dem Schaltungsträger separat angeordnet werden, wodurch sich die thermische Belastung des Lichtwellenleiters auch im Betrieb deutlich verringern lässt.

Eine besonders kostengünstige und sichere Methode der Fixierung des Einsteckkopfes auf dem Lichtwellenleiter stellt die Laserschweißung dar.

Gemäß einer bevorzugten Ausführungsform weist der Einsteckkopf Rastelemente auf, die im Zusammenwirken mit entsprechenden Rastöffnungen in der Fassung für die Positionierung und mechanische Fixierung des Lichtwellenleiters in Bezug auf die Diode sorgen. Auf diese Weise kann der Einsteckvorgang des Lichtwellenleiters leicht automatisiert werden und es wird kein thermischer Fixierungsprozess für die Verbindung des Lichtwellenleiters mit der Diode mehr benötigt.

Dadurch, dass der Einsteckkopf Justiervorsprünge aufweist, die mit entsprechenden Justieraufnahmen an der Fassung zusammenwirken, kann in besonders effizienter Weise die Positionierung des Lichtwellenleiters über der Sende- und/oder Empfangsdiode sowohl in horizontaler wie auch in vertikaler Richtung erfolgen.

Gemäß einer alternativen Ausführungsform weist der Einsteckkopf mindestens einen Bajonettvorsprung auf, der im Zusammenwirken mit einer jeweils entsprechenden Bajonetteingriffsöffnung in der Fassung für die Positionierung und mechanische Fixierung des Lichtwellenleiters in Bezug auf die Diode nach dem Prinzip eines Bajonettverschlusses sorgt. Diese Art der Fixierung bietet den Vorteil, dass der Kraftaufwand für ein Lösen der Verbindung wesentlich geringer ist als beim Verrasten und so die Gefahr einer mechanischen Schädigung reduziert wird.

Um zu verhindern, dass sich der Einsteckkopf bei unbeabsichtigtem Verdrehen aus der Aufnahme löst, wird gemäß einer vorteilhaften Weiterbildung an der Federhülse ein freigeschnittener Federarm vorgesehen, der den Bajonettvorsprung nach dem Erreichen seiner endgültigen Position in der Bajonettöffnung fixiert. Über eine an dem freien Ende des Federarms angeformte und von außen zum Zwecke einer Betätigung zugängliche Auslenkfeder kann diese Bajonettsicherung zum Entfernen des Einsteckkopfes gelöst werden.

Sieht man an der Fassung Justierstifte vor, die in entsprechende Justieröffnungen am Schaltungsträger einführbar sind, so kann auf besonders einfache und exakte Weise die geometrische Lage der Fassung und damit auch des späteren eingesteckten Lichtwellenleiters festgelegt werden.

Das Verlöten der Federhülse mit dem Schaltungsträger stellt eine kostengünstige und sichere Möglichkeit der mechanischen Fixierung dar.

Eine besonders kostengünstige Herstellungsmöglichkeit für die Federhülse ist die Fabrikation durch Stanzen und Biegen aus Metall. Die Federhülsen können auf diese Weise als Bandmaterial zur Verfügung gestellt werden.

Fertigt man die Aufnahme in Spritzgusstechnik aus Kunststoff, so können die Rastöffnungen und Justiervorsprünge unter Einhaltung besonders geringer Toleranzen gefertigt werden. Darüber hinaus besitzt Kunststoff ein geringes Eigengewicht und kann sehr kostengünstig hergestellt werden. Aus dem gleichen Grund wird auch der Einsteckkopf vorzugsweise in Spritzgusstechnik aus Kunststoff gefertigt.

Anhand der in den beiliegenden Zeichnungen dargestellten bevorzugten Ausgestaltungen wird die Erfindung im folgenden näher erläutert. Ähnliche oder korrespondierende Einzelheiten der erfindungsgemäßen Kopplungsvorrichtung sind in den Figuren mit denselben Bezugszeichen versehen. Es zeigen:
- **Figur 1**: eine perspektivische Darstellung eines Lichtwellenleiters mit einem Einsteckkopf gemäß einer ersten Ausführungsform;
- **Figur 2**: eine perspektivische Darstellung eines Ausschnitts aus einem Schaltungsträger mit montierter Diode und der sie umgebenden Fassung gemäß einer ersten Ausführungsform;
- **Figur 3**: eine Seitenansicht der erfindungsgemäßen Kopplungsvorrichtung bei eingestecktem Lichtwellenleiter gemäß der ersten Ausführungsform;
- **Figur 4**: eine Seitenansicht der erfindungsgemäßen Kopplungsvorrichtung gemäß einer zweiten Ausführungsform;
- **Figur 5**: ein Schnittbild durch die erfindungsgemäße Kopplungsvorrichtung gemäß der zweiten Ausführungsform;
- **Figur 6**: ein Detail aus dem Schnittbild der Figur 5;
- **Figur 7**: ein weiteres Detail aus dem Schnittbild der Figur 5;
- **Figur 8**: eine Draufsicht auf einen Ausschnitt des Schaltungsträgers;
- **Figur 9**: eine weitere Seitenansicht der erfindungsgemäßen Kopplungsvorrichtung gemäß der zweiten Ausführungsform;
- **Figur 10**: ein Flussdiagramm über den Ablauf der Montage von Diode und Lichtwellenleiter auf einem Schaltungsträger;
- **Figur 11**: eine perspektivische Ansicht der erfindungsgemäßen Kopplungsvorrichtung gemäß einer dritten Ausführungsform;
- **Figur 12**: eine Explosionsdarstellung der erfindungsgemäßen Kopplungsvorrichtung gemäß der dritten Ausführungsform.

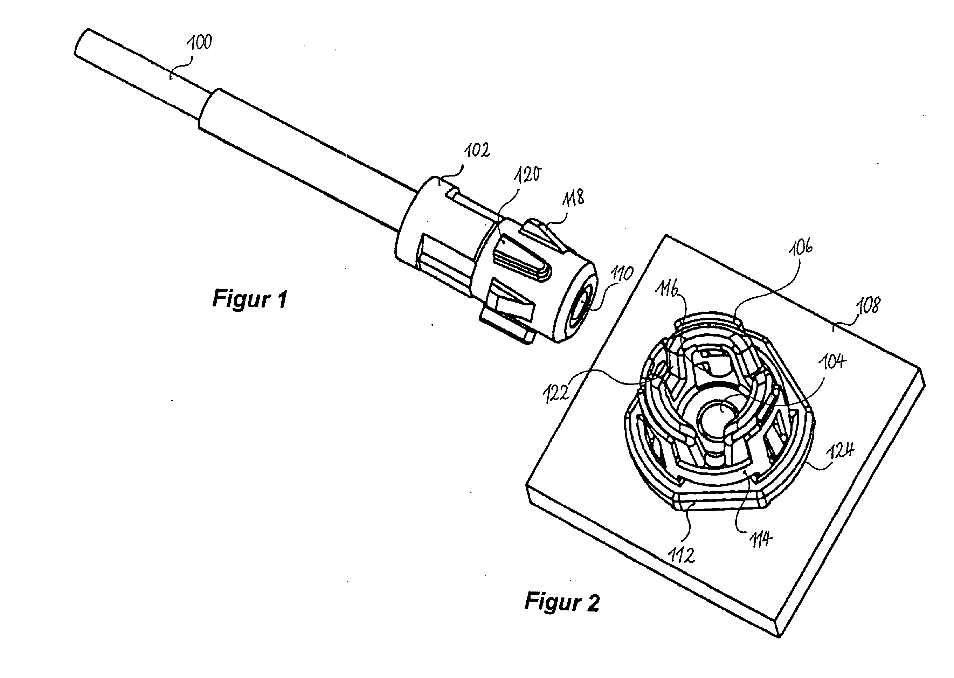

In den Figuren 1 und 2 ist die erfindungsgemäße Kopplungsvorrichtung gemäß einer ersten Ausführungsform in einer perspektivischen Ansicht dargestellt. Dabei zeigt Figur 1 einen Lichtwellenleiter 100 mit einem Einsteckkopf 102 vor der endgültigen Montage auf einem Schaltungsträger, hier einer Leiterplatte. Als Lichtwellenleiter 100 wird für die vorliegende Ausführungsform eine sogenannte Plastic Optical Fiber (POF) verwendet. Eine Glasfaser kann jedoch ebenfalls eingesetzt werden. Der Einsteckkopf 102 des Lichtwellenleiters 100 kann nun für eine Montage des Lichtwellenleiters 100 über der in Figur 2 dargestellten Diode 104 in eine Fassung 106 eingesteckt werden. Die Diode 104 und die sie umgebende Fassung 106 sind direkt auf einem hier nur ausschnittsweise dargestellten Schaltungsträger 108 montiert. Der Schaltungsträger ist vorzugsweise eine gedruckte Leiterplatte, kann jedoch auch ein Keramiksubstrat oder eine flexible Leiterplatte sein. Im montierten Zustand befindet sich die Stirnfläche 110 des Lichtwellenleiters 100 in optimaler Position über der Diode 104, so dass eine effiziente optische Kopplung stattfinden kann. Hierfür muss die Stirnfläche 110 des Lichtwellenleiters 100 nicht unbedingt senkrecht auf der Längsachse des Lichtwellenleiters 100 stehen, sondern kann mit derselben um einen Winkel von beispielsweise 8° geneigt sein, um Rückreflexionen von der Lichtwellenleiterstirnfläche auf die Diode 104 zu vermeiden.

Wie aus den folgenden Figuren noch deutlicher wird, ist die Fassung 106 durch eine Kunststoffaufnahme 112 und eine metallene Federhülse 114 gebildet. Die Aufnahme 112 besitzt Rastöffnungen 116, in die entsprechende an dem Einsteckkopf 102 vorgesehene Rastvorsprünge 118 zur Fixierung des Einsteckkopfes 102 einrasten können. Erste Justiervorsprünge 120 ermöglichen im Zusammenspiel mit Justieröffnungen 122 an der Aufnahme eine exakte Positionierung des Einsteckkopfes in der Aufnahme 112. Darüber hinaus besitzt die Aufnahme 112 einen Flansch 124, dessen Stirnfläche senkrecht zur Lichtwellenleiterachse und parallel zur Oberfläche des Schaltungsträgers verläuft. Die Federhülse 114 dient einerseits als federnde mechanische Verstärkung der Aufnahme 112, andererseits einer sicheren Befestigung der gesamten Fassung auf dem Schaltungsträger 108. Hierzu kann, wie im folgenden noch deutlicher wird, die Federhülse 114 mit dem Schaltungsträger 108 verlötet werden. Die Diode 104, die sowohl Sender wie auch Empfänger sein kann, ist als sogenannter "side looker" ausgeführt, d. h. sie besitzt einen besonders großen Öffnungswinkel (beispielsweise 120°).

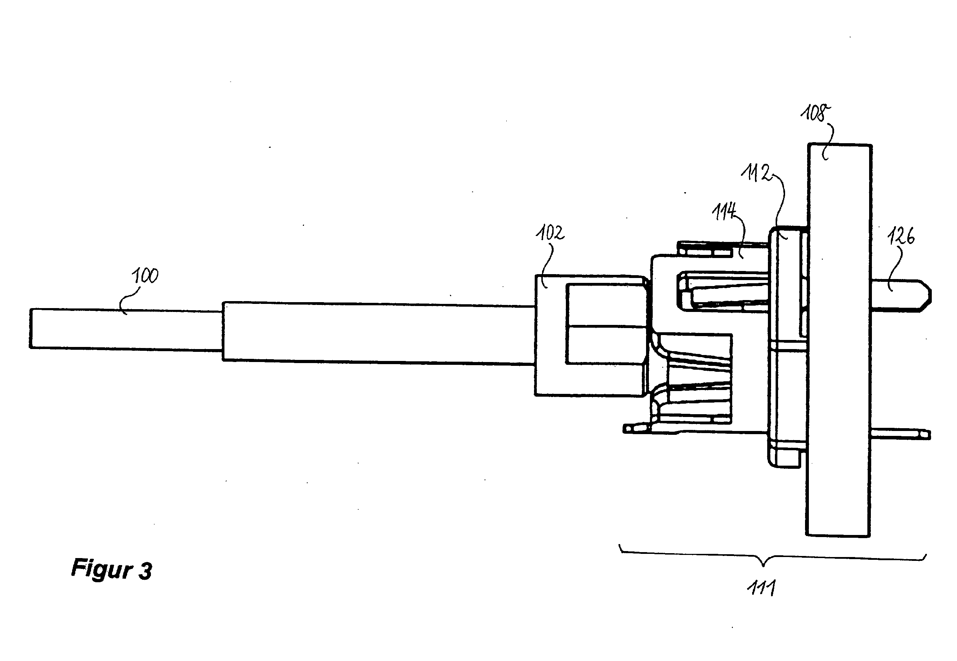

Figur 3 zeigt eine Seitenansicht der erfindungsgemäßen Kopplungsvorrichtung bei eingestecktem Lichtwellenleiter 100. Die aus der Aufnahme 112 und der Federhülse 114 gebildete Fassung 111 nimmt bei dieser Ausführungsform den Einsteckkopf 102 ca. zur Hälfte auf. Über Stifte 126, welche den Schaltungsträger 108 durchdringen, kann die Hülse mit dem Schaltungsträger 108 verlötet werden. Auf diese Weise kann eine besonders sichere Zugentlastung gewährleistet werden, die es ermöglicht, den Lichtwellenleiter 100 problemlos und beliebig oft von der Aufnahme 112 zu lösen. Der Einsteckkopf 102 wird mit dem Lichtwellenleiter 100 vorzugsweise laserverschweißt.

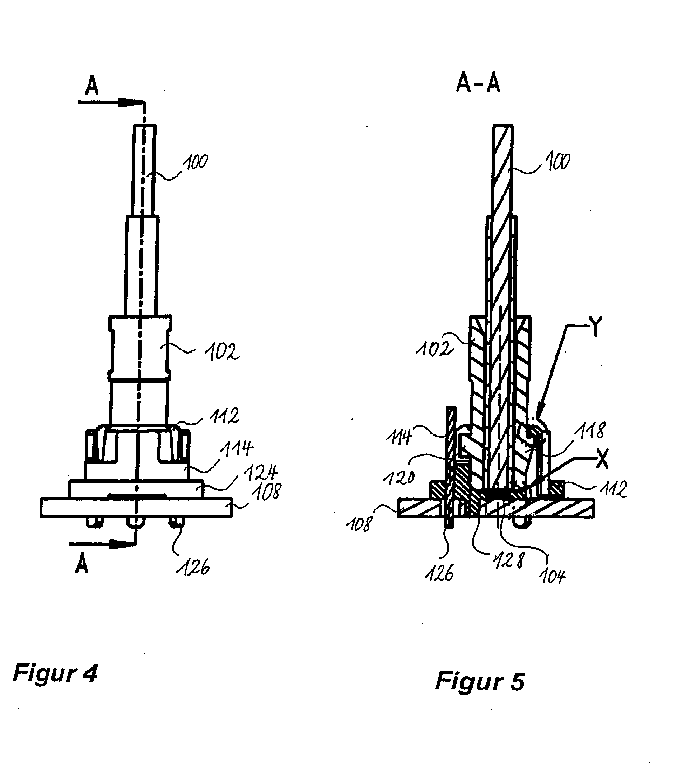

Figur 4 zeigt eine Seitenansicht der erfindungsgemäßen Kopplungsvorrichtung gemäß einer zweiten Ausführungsform bei eingestecktem Lichtwellenleiter 100. Im Unterschied zu der in Figur 3 gezeigten Ausführungsform wird bei dieser Ausführungsform der Einsteckkopf 102 nur zu etwa einem Drittel seiner Gesamtlänge in die Aufnahme 112 eingeführt.

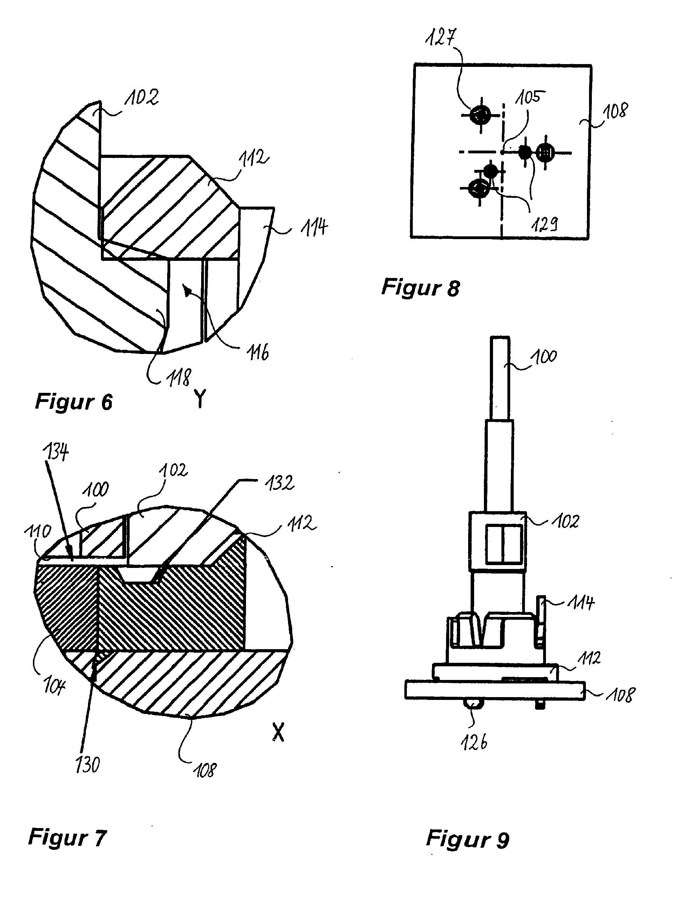

Einen Schnitt entlang der in Fig. 4 gezeigten Schnittlinie A-A zeigt Figur 5. Aus dieser Darstellung ist die Lage des Lichtwellenleiters 100 über der Diode 104 ersichtlich. In dem gezeigten eingesteckten Zustand greifen die Rastvorsprünge 118 an dem Einsteckkopf 102 in entsprechende Rastöffnungen 116 an der Aufnahme. Justiervorsprünge 120 ermöglichen die exakte Positionierung des Einsteckkopfes in der Aufnahme. Die Details X und Y, genauer dargestellt in den Figuren 6 und 7, beleuchten den Bereich, in dem Einsteckkopf und Aufnahme aufeinandertreffen, sowie die Verrastung zwischen Einsteckkopf und Aufnahme genauer. Die Aufnahme 112 weist außerdem Positionierstifte 128 auf, die mit entsprechenden Positionieröffnungen mit dem Schaltungsträger 108 zusammenwirken und auf diese Weise ein eindeutige Positionierung der Aufnahme mit Bezug auf den Schaltungsträger ermöglichen.

In Figur 6 ist die Detailansicht Y vergrößert gezeichnet. Zur Fixierung des Einsteckkopfes 102 in der Aufnahme 112 greifen Rastvorsprünge 118 in entsprechende Rastöffnungen 116 in der Aufnahme 112. Da die Aufnahme, die vorzugsweise aus einem Kunststoff hergestellt ist, keine optimalen Federeigenschaften aufweist, wird sie erfindungsgemäß durch die Federhülse 114 von außen abgestützt.

Figur 7 zeigt in vergrößerter Darstellung das Detail X aus Figur 5. In dieser Detailansicht ist die spezielle Gestaltung der Aufnahme 100 sowie Position des Lichtwellenleiters 100 im endgültig montierten Zustand genauer dargestellt. Da die Diode 104 erst nach der Positionierung der Aufnahme 112 und der Federhülse 114 vergossen wird, weist die Aufnahme 112 eine Dichtlippe 130 sowie einen Überlauf 132 zur Lenkung der Vergussmasse auf. Auf diese Weise kann sichergestellt werden, dass keine Vergussmassenreste die exakte Positionierung des Einsteckkopfes 102 beeinträchtigen. Für die Qualität der optischen Kopplung zwischen Diode 104 und der Lichtleitfaser 100 ist von Bedeutung, dass ein schmaler Luftspalt 134 zwischen der Stirnfläche 110 des Lichtwellenleiters 100 und der Oberfläche der Diode 104 vorgesehen ist.

Figur 8 zeigt den Bereich des Schaltungsträgers 108 von unten, in welchem die Diode 104 montiert ist. Der Mittelpunkte der Diode bzw. der Durchdringungspunkt der Lichtwellenleiterachse ist hier mit 105 gekennzeichnet. Zwei Justieröffnungen 129 dienen der Aufnahme der Stifte 128 an der Aufnahme. Die Öffnungen 127 nehmen die Stifte 126 an der Federhülse auf. Um nach dem Verlöten der Stifte 126 einen möglichst sicheren Halt zu gewährleisten, sind insgesamt drei Öffnungen 127 vorgesehen.

Figur 9 zeigt eine weitere Seitenansicht der erfindungsgemäßen Kopplungsvorrichtung bei eingestecktem Lichtwellenleiter 100, die im Vergleich zu der in Figur 4 dargestellten Ansicht um 90° um die Längsachse gedreht ist.

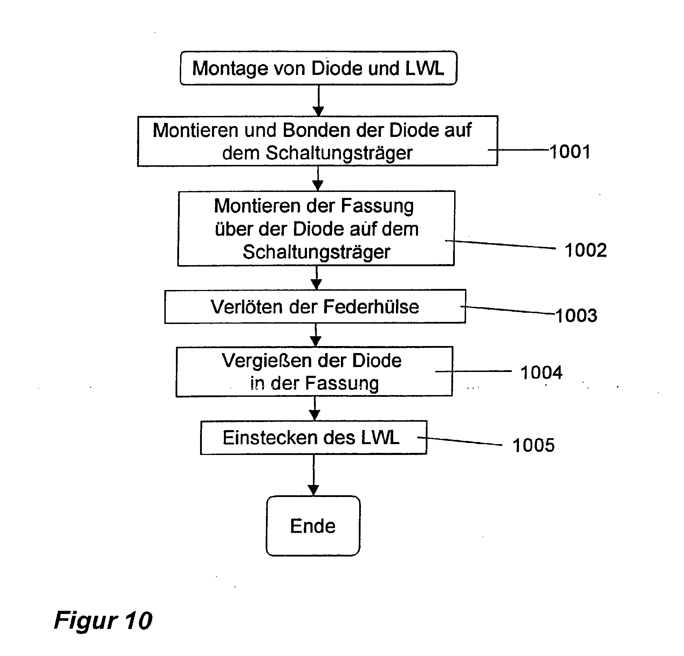

In Figur 10 sind die Montageschritte zusammengefasst, die bei der Montage der Diode und des Lichtwellenleiters auf einem Schaltungsträger mit Hilfe der erfindungsgemäßen Kopplungsvorrichtung durchlaufen werden. Dabei wird zunächst in Schritt 1001 die Diode auf den Schaltungsträger geklebt und anschließend durch Bonden elektrisch mit entsprechenden Anschlüssen auf dem Schaltungsträger verbunden. In Schritt 1002 wird die aus der Aufnahme und der Federhülse gebildete Fassung über die Diode geschoben und auf dem Schaltungsträger montiert. Die Fassung kann dabei in Form von Bandware vorliegen, wenn man eine Verrastung zwischen der Federhülse und der Aufnahme vorsieht. Die Positionierung der Fassung über der Diode erfolgt über die Justierstifte an der Aufnahme. In Schritt 1003 wird die Federhülse (mit Hilfe der vorgesehenen Stifte beispielsweise durch Schwalllöten fixiert. Im nächsten Schritt, dem Schritt 1004, wird die in der Fassung befindliche Diode mit einer Vergussmasse umhüllt. Dieser Kunststoff schützt das Bauteil und die elektrischen Anschlüsse vor äußeren Einflüssen. Der Lichtwellenleiter, der mit einem Einsteckkopf versehen ist, wird erst im letzten Schritt, dem Schritt 1005, in die Aufnahme eingesteckt. Auf diese Weise kann sichergestellt werden, dass der Lichtwellenleiter durch keinen der vorangegangenen Hochtemperaturprozesse geschädigt wird.

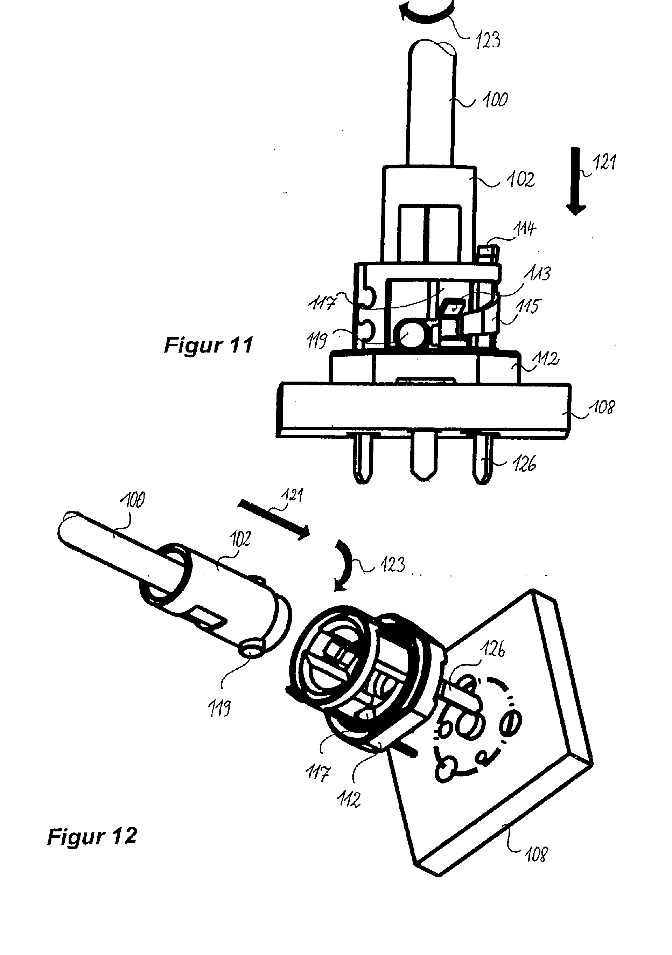

Gemäß einer weiteren vorteilhaften Ausführungsform erfolgt, wie in den Figuren 11 und 12 dargestellt, die Fixierung des Einsteckkopfes 102 in der Aufnahme 112 mit Hilfe eines Bajonettverschlusses. Der Einsteckkopf trägt dazu zwei bolzenförmige Bajonettvorsprünge 119, die einander gegenüber liegend am äußeren Umfang der Aufnahme 112 angeformt sind.

Nach dem bekannten Prinzip des Bajonettverschlusses werden diese Bajonettvorsprünge 119 beim Montieren des Einsteckkopfes 102 mit einer in Richtung des Pfeils 121 orientierten Einsteckbewegung in einen Einführbereich der zugehörigen L-förmigen, an der Aufnahme ausgebildeten Bajonettöffnungen 117 eingeschoben. Durch eine anschließende Drehbewegung in Richtung des Pfeils 123 werden die Bajonettvorsprünge 119 anschließend in den Halterungsbereich der Bajonettöffnungen 117 eingeführt und der Einsteckkopf 102 ist in dieser Position nicht mehr in axialer Richtung verschieblich.

Um den montierten Einsteckkopf 102 auch gegen ein Lösen aus der Aufnahme 112 durch eine unbeabsichtigte Drehung zu sichern, weist die Federhülse 114 einen freigeschnittenen Federarm 115 auf, der einen der Bajonettvorsprünge 119 in seiner Position im Halterungsbereich fixiert. Es könnten aber auch zwei Federarme 115 vorgesehen werden. Über eine an dem freien Ende des Federarms 115 angeformte, von außen zugängliche Auslenkfeder 113 kann diese Sicherung zum Entnehmen des Einsteckkopfes 102 aus der Aufnahme 112 z. B. mittels eines geeigneten Werkzeugs gelöst werden. Aus Figur 11 ist außerdem erkennbar, dass die Auslenkfeder 113 so gestaltet ist, dass der Bajonettvorsprung 119 beim Einführen in Richtung des Pfeils 121 mit ihrer Hilfe den Federarm 115 nach außen drückt und somit das Einführen des Einsteckkopfes 102 ermöglicht.

Obwohl bisher nur die Kopplung eines LWL mit einer Diode gezeigt wurde, kann die Erfindung auch auf eine zwei- oder mehrpolige Fassung angewendet werden, bei der eine Aufnahme zwei Dioden umschließt und zwei voneinander getrennt LWL aufnimmt. Für jede Diode könnte hier eine gesonderte Federhülse vorgesehen werden.

## Patentansprüche

1. Kopplungsvorrichtung zur Kopplung mindestens eines Lichtwellenleiters (100) und mindestens einer Sende- und/oder Empfangsdiode (104) miteinander, wobei die Sende- und/oder Empfangsdiode (104) elektrisch mit einem Schaltungsträger (108) und optisch mit dem Lichtwellenleiter (100) verbindbar ist und die Kopplungsvorrichtung eine mit der Sende- und/oder Empfangsdiode (104) mechanisch verbindbare Fassung (111) und einen davon getrennten, mit dem Lichtwellenleiter (100) mechanisch verbindbaren Einsteckkopf (102), der zumindest teilweise in die Fassung (111) einführbar ist, aufweist,
**dadurch gekennzeichnet,**
**dass** die Fassung (111) eine Aufnahme (112) für die Positionierung und mechanische Fixierung des Einsteckkopfes (102) sowie eine davon getrennte Federhülse (114), die mit den Schaltungsträger (108) verbindbar ist, aufweist.

2. Kopplungsvorrichtung nach Anspruch 1, **dadurch gekennzeichnet, dass** der Einsteckkopf (102) durch Laserschweißung mit dem Lichtwellenleiter (100) verbindbar ist.

3. Kopplungsvorrichtung nach Anspruch 1 oder 2, **dadurch gekennzeichnet, dass** der Einsteckkopf (102) Rastelemente (118) aufweist, die im Zusammenwirken mit entsprechenden Rastöffnungen (116) an der Fassung (111) für die Positionierung und mechanische Fixierung des Lichtwellenleiters (100) über der Sende- und/oder Empfangsdiode (104) sorgen.

4. Kopplungsvorrichtung nach einem der Ansprüche 1 bis 3, **dadurch gekennzeichnet, dass** der Einsteckkopf (102) Justiervorsprünge (120) aufweist, die im Zusammenwirken mit entsprechenden Justieraufnahmen (122) an der Fassung (111) für die Positionierung des Lichtwellenleiters (100) über der Sende- und/oder Empfangsdiode (104) sorgen.

5. Kopplungsvorrichtung nach Anspruch 1 oder 2, **dadurch gekennzeichnet, dass** der Einsteckkopf (102) mindestens einen Bajonettvorsprung (119) aufweist, der im Zusammenwirken mit einer jeweils entsprechenden Bajonetteingriffsöffnung (117) an der Fassung (111) nach dem Prinzip eines Bajonettverschlusses für die Positionierung und mechanische Fixierung des Lichtwellenleiters (100) über der Sende- und/oder Empfangsdiode (104) sorgen.

6. Kopplungsvorrichtung nach Anspruch 5, **dadurch gekennzeichnet, dass** an der Federhülse (114) ein freigeschnittener Federarm (115) angeformt ist, der den Bajonettvorsprung (119) nach dem Erreichen seiner endgültigen Position in der Bajonettöffnung (117) fixiert.

7. Kopplungsvorrichtung nach Anspruch 6, **dadurch gekennzeichnet, dass** an dem freien Ende des Federarms (115) eine von außen zum Zwecke einer Betätigung zugängliche Auslenkfeder (113) angeformt ist.

8. Kopplungsvorrichtung nach einem der Ansprüche 1 bis 7, **dadurch gekennzeichnet, dass** die Fassung (111) Justierstifte (128) aufweist, die mit entsprechenden Justieröffnungen (129) in dem Schaltungsträger (108) zur korrekten Positionierung der Fassung (111) auf dem Schaltungsträger (108) zusammenwirken.

9. Kopplungsvorrichtung nach einem der Ansprüche 1 bis 8, **dadurch gekennzeichnet, dass** die Federhülse (114) durch Löten mit dem Schaltungsträger (108) verbindbar ist.

10. Kopplungsvorrichtung nach einem der Ansprüche 1 bis 9, **dadurch gekennzeichnet, dass** die Federhülse (114) durch Stanzen und Biegen aus Metall gefertigt ist.

11. Kopplungsvorrichtung nach einem der Ansprüche 1 bis 10, **dadurch gekennzeichnet, dass** die Aufnahme (112) in Spritzgusstechnik aus Kunststoff gefertigt ist.

12. Kopplungsvorrichtung nach einem der Ansprüche 1 bis 11, **dadurch gekennzeichnet, dass** der Einsteckkopf (102) in Spritzgusstechnik aus Kunststoff gefertigt ist.

13. Montageverfahren zur Kopplung mindestens eines Lichtwellenleiters und mindestens einer Sende- und/oder Empfangsdiode miteinander und mit einem Schaltungsträger, wobei
die Sende- und/oder Empfangsdiode elektrisch mit dem Schaltungsträger und optisch mit dem Lichtwellenleiter verbindbar ist,
die Kopplungsvorrichtung eine mit der Sende- und/oder Empfangsdiode und dem Schaltungsträger mechanisch verbindbare Fassung, die eine Aufnahme für die Positionierung und mechanische Fixierung des Einsteckkopfes sowie eine davon getrennte Federhülse aus Metall umfasst, und einen davon getrennten, mit dem Lichtwellenleiter mechanisch verbindbaren Einsteckkopf aufweist,
der Einsteckkopf zumindest teilweise in die Fassung einführbar ist und
das Verfahren die folgenden Schritte aufweist:
(a) Montieren und Bonden der Sende- und/oder Empfangsdiode auf dem Schaltungsträger,
(b) Montieren der Fassung auf dem Schaltungsträger,
(c) Verbinden der Fassung mit dem Schaltungsträger,
(d) Vergießen der Sende- und/oder Empfangsdiode in der Fassung,
(e) Einstecken des Lichtwellenleiters in die Fassung.

14. Verfahren nach Anspruch 13, **dadurch gekennzeichnet, dass** und der Schritt (c) ein Verlöten der Federhülse mit dem Schaltungsträger beinhaltet.
